Europäisches Patentamt

European Patent Office

Office européen des brevets

(19)

(11) Numéro de publication: **0 173 609**
**B1**

(12) **FASCICULE DE BREVET EUROPÉEN**

(45) Date de publication du fascicule du brevet:
27.04.88

(51) Int. Cl.⁴: **C 09 C 1/00, C 09 D 5/24**

(21) Numéro de dépôt: **85401525.2**

(22) Date de dépôt: **24.07.85**

(54) Procédé de préparation d'un pigment oxyde d'étain dopé à l'oxyde d'antimoine ayant des propriétés de conductivité électrique améliorées et peintures conductrices blanches et teintées contenant ce pigment utiles pour l'élimination des charges électro-statiques.

(30) Priorité: **02.08.84 FR 8412240**

(43) Date de publication de la demande:
**05.03.86 Bulletin 86/10**

(45) Mention de la délivrance du brevet:
**27.04.88 Bulletin 88/17**

(84) Etats contractants désignés:
**BE CH DE FR GB IT LI LU NL**

(56) Documents cité:
**EP-A-0 020 237**
**EP-A-0 064 558**
**FR-A-1 221 750**

**TRANSACTIONS AND JOURNAL OF THE BRITISH CERAMIC SOCIETY, vol. 78, no. 3, 1979, pages 52-56, The British Ceramic Society, Stoke-on-Trent, GB; G. CROFT et al.: 12-Crystalline oxidic solid solutions of tin (IV) and titanium (IV), their coloration by and thermal reaction with some metal ions. Part 1: The rutile SnchiTi(1-chi)O2 system and its interaction with V(V), Cr(III), Cr(VI),Mn(II), Fe(III), Co(II), Ni(II), Cu(II) and Sb(III)"**
**CHEMICAL ABSTRACTS, vol. 87, 1977, page 236, no. 156036y, Columbus, Ohio, US; A. BROLL et al.: "Inclusion pigments.Coloring substances according to a new principle"**

(73) Titulaire: **CENTRE NATIONAL D'ETUDES SPATIALES, 2 Place Maurice- Quentin, F-75039 Paris Cedex 01 (FR)**
Titulaire: **MAP, Zone Industrielle Chemin de la Rijole, F-09100 Pamiers (FR)**

(72) Inventeur: **Guillaumon, Jean Claude, Chemin de Pouze Ayguesvives, F-31450 Montgiscard (FR)**
Inventeur: **Blet, Louis Joseph Clément, Route de Montbrun Corronsac, F-31450 Montgiscard (FR)**
Inventeur: **Guerard, Françoise M. J. B., Le Carrerot La Tour du Crieu, F-09100 Pamiers (FR)**

(74) Mandataire: **de Boisse, Louis, CABINET DE BOISSE 37, Avenue Franklin D. Roosevelt, F-75008 Paris (FR)**

LIBER, STOCKHOLM 1988

**Description**

L'invention concerne un procédé de prèparation d'un pigment oxyde d'étain dopé à l'oxyde d'antimoine ayant des propriétés de conductivité électrique améliorée, et des peintures conductrices blanches et teintées contenant ce pigment utiles pour l'élimination des charges électro-statiques.

L'utilisation de plus en plus grande dematériaux composites (époxydes/fibres de carbone , carbone/fibres de carbone , époxy/fibres de verre, époxy/fibres d'aramides , etc..) pour la fabrication des structures d'avion, entraîne we accumulation de charges électro-statiques à la surface des avions du fait de la résistance électrique élevée de ces composites.

Cette accumulation de charges électriques notamment par l'effet triboélectrique des aérosols, provoque des décharges gênantes pour le bon fonctionnement des systèmes de radiocommunication et de radionavigation pouvant, dans certains cas, aller jusqu'à la perte totale de transmission radio entre l'avion et le sol (radiocompas notamment).

Pour que les charges électriques soient évacuées correctement et ne perturbent pas les liaisons radio, il faut que la résistance électrique superficielle de l'avion soit comprise entre 1 et 100 MΩ/carré.

L'écoulement des charges électriques ne peut pas être assuré par les peintures de finition existantes (blanches en général) car elles présentent une résistance électrique superficielle très élevée (supérieure à $10^{11}$ Ω/carré.

Ces peintures de finition sont requises pour assurer une protection des avions contre l'environnement naturel (pluie, soleil, ..) ou accidentel (projection de carburants, huiles, etc..).

Les solutions actuellement connues pour éliminer les charges électro-statiques consistent en :

- soit une métallisation des surfaces électriquement isolantes (treillis métallique, bandes adhésives conductrices, etc..) puis l'application d'une peinture de finition isolante d'épaisseur bien déterminée,
- soit l'application d'une peinture noire conductrice qui est stabilisée par une cuisson au four, puis application d'une peinture de finition isolante, d'épaisseur bien déterminée.

Ces deux solutions présentent deux inconvénients majeurs :

- difficulté de mise en oeuvre et coût élevé,
- réfection longue et délicate car elle exige un décapage complet du revêtement afin de ne pas créer de surépaisseur de la couche de finition isolante, laquelle entraînerait inévitablement des claquages.

Il serait donc avantageux de disposer d'une peinture de finition conductrice de l'électricité que l'on appliquerait en une ou plusieurs couche(s) sur les parties isolantes de l'avion et dont les tolérances d'épaisseur ne seraient pas critiques. Toutefois, pour pouvoir préparer une peinture de finition conductrice de l'électricité satisfaisant aux conditions de résistance électrique superficielle sus-mentionnées, il faut disposer d'un pigment ayant lui-même une faible résistance électrique superficielle, c'est-à-dire n'excédant pas environ 20Ω/carré, car autrement, après mélange avec un liant et les autres constituants éventuels de la peinture, on obtient des peintures à conductivité électrique insuffisante.

En outre, le pigment doit présenter avantageusement une couleur satisfaisante, c'est-à-dire être le plus blanc possible, car la plus grande partie des besoins de l'industrie aéronautique concerne des peintures blanches.

On connaît déjà par EP-A-0 064 558 une composition de revêtement transparente antistatique comprenant un liant et une poudre conductrice de l'électricité constituée d'oxyde d'étain contenant 0,1 à 20 % en poids d'antimoine et ayant une grosseur de particules de 0,4/μm ou moins, cette poudre formant 5 à 90 % du total liant + poudre. La poudre conductrice de l'électricité est produite par co-précipitation d'une solution d'un composé d'étain et d'un composé d'antimoine suivie d'une calcination du précipité obtenue à 400-600°C. Le revêtement antistatique obtenu à l'aide de la composition brevetée n'est pas blanc, mais transparent.

On connait aussi par un article de G. Croft et M.J. Fuller, paru dans Transactions and Journal of the British Ceramic Society, vol. 78, N°3 (1070), pages 52-56, la préparation de $SnO_2$ dopé au Sb (III) par un procédé consistant à mélanger un gel de $SnO_2$ (0,1 mole) et du $Sb_2O_3$ (0,005 mole), puis à calciner à 1250°C pendant 4 heures le mélange obtenu. Le produit obtenu présente une couleur grise. On n'indique pas quelle est la résistance électrique superficielle de ce produit.

Les Demanderesses ont maintenant trouvé un nouveau procédé de préparation d'un pigment, de couleur proche du blanc, ayant une résistance électrique superficielle n'excédant pas environ 20 ohms/carré, qui convient à la préparation de peintures de finition blanches ou colorées ayant une résistance électrique superficielle comprise entre et 100 MΩ/carré et qui peuvent être appliquées en une seule couche directement sur les parties isolantes d'un avion.

Plus particulièrement, l'invention concerne un procédé de préparation d'oxyde d'étain dopé par de l'oxyde d'antimoine, comprenant la préparation d'un mélange intime d'oxyde d'étain et d'oxyde d'antimoine contenant 0,1 à 20 % en poids d'antimoine puis le chauffage à température élevée du mélange résultant, caractérisé en ce qu'on mélange une proportion de 1,25 à 10 parties en poids d'oxyde d'antimoine $Sb_2O_3$ par 100 parties en poids d'oxyde d'étain $SnO_2$ et en ce qu'on calcine le mélange de $Sb_2O_3$ et de $SnO_2$ à une température dans la gamme de 900 à 950°C, de manière à obtenir un pigment oxyde d'étain dopé par de l'oxyde d'antimoine ayant une couleur blanche ou proche du blanc et une résistance électrique superficielle au plus égale à 20 ohms/carré.

Il convient de rappeler que le concept de résistance électrique superficielle résulte de l'observation que:

$$R = P \frac{l}{el}$$

où R = résistance en ohms,

P = résistivité de la matière,

L = longeur,

l = largeur,

e = épaisseur.

Dans le cas où L = l, n'importe quel carré d'épaisseur constante aura la même résistance.

Dans le procédé de l'inrention, on calcine le mélange de $Sb_2O_3$ et de $SnO_2$ à une température dans la game de 900 à 950°C.

Au-dessous de 900°C, la résistance électrique superficielle obtenue est trop élevée et au-dessus de 950°C, l'oxyde d'étain commence à se décomposer. La durée de la calination peut aller de quelques minutes à quelques heures.

L'invention concerne, en outre, une peinture blanche ou colorée comprenant au moins un pigment, au moins un liant et au moins un solvant, caractérisée er ce que le pigment est un pigment obtenu par le procédé de l'invention. A titre indicatif, le pigment sera présent dans la peinture sous forme de particules d'une grosseur supérieure à 1 µm, typiquement dans la gamme de 5 à 150 µm, pour obtenir un pouvoir couvrant satisfaisant.

Les peintures de l'invention peuvent s'appliquer en une ou/ plusieurs couche(s) sur le substrat à peindre en donnant des feuls de peinture d'une épaisseur avantageuse ment comprise entre 5 et 250 micromètres et d'une résistance électrique superficielle comprise entre 1 et 100 MΩ/carré.

Toutes les résistances électriques superficielles afférentes au pigment dopé indinuées dans le présent mémoire sont données pour une épaisseur de carré de 1 mm tandis que toutes les résistances électriques superficielles afférentes aux peintures de l'invention sont données pour l'épaisseur du feul de peinture appliqué (habituellement 30 à 60 micromètres), puisque c'est 12 résistance électrique superficielle de ce feul qui est importante en pratique.

Les peintures de l'invention comprennent au moins un pigment selon l'invention et au moins un liant à propriétés filmogènes.

On teut utiliser n'importe quel liant connu comme étant utile pour la formation de peintures. On peut citer, à titre d'exemples non limitatifs, des polyuréthanes, des résines époxydes, des résines acryliques, des résines glycérophtaliques, des résines silicones, etc.. L'homme de l'art pourra trouver dans l'abondante littérature publiée à ce sujet, de nombreux types de liants utilislibles. A ce jour, on préfère utiliser des polyuréthanes pour les applications aéronautiques.

Outre le pigment de l'invention et le liant, les peintures de l'invention peuvent comprendre un pigment blanc non conducteur de l'électricité, par exemple de l'oxyde de titane, de l'oxyde de zinc, de l'orthotitanate de zinc, etc.., destiné à améliorer la blancheur de la peinture, et/ou un pigment coloré non conducteur de l'électricité destiné à lui conférer une coloration désirée.

Lorsqu'on incorpore à la peinture de l'invention un pigment blanc non conducteur de l'électricité et/ou un pigment coloré non conducteur de l'électricité, il faut veiller à ce que le rapport en poids pigments non conducteur de l'électricité/ pigment de l'invention n'excède pas 1 : 1.

D'autre part, le rapport en poids pigments totaux/liant sera haubituellement dans la gamme de 1,5 à 4, bien que ces valeurs ne soient pas étroitement critiques.

Comme solvant on peut utiliser à titre indicatif, des hydrocarbures aromatiques (toluène, xylène, styrène, naphta, etc.), des hydrocarbures aliphatiques (white spirit, essences, pétrole, etc.), des cétones (méthyléthylcétone, méthylisobutylcétone, diacétone alcool, etc.), des esters (acétate d'éthyle, acetate de butyle, acétate de propyle, acétate d'éthylèneglycol, acétate de butylèneglycol, etc.), des éthers de glycol (éthylglycol, butylglycol, méthylène glycol, propylène glycol, etc.), des alcools (éthanol, propanol, butanol, etc.), des hydrocarbures terpéniques (essence de térébenthine, etc.) et de l'eau. La proportion de solvant sera habituellement comprise dans la ganme de 0 à 60 % en poids par rapport au poids total de la peinture.

Bien entendu, les peintures de l'invention peuvent comprendre également tous adjuvants désirés communément employés dans les formulations de peintures, à condition bien sûr qu'ils ne dégradent pas excessivement les propriétés de conductivités électrique du feul de peinture.

L'application de la couche de peinture de l'invention sur un substrat peut s'effectuer au pistolet à peinture, à la brosse ou par toute autre technique connue.

La peinture de l'invention peut être appliquée sur toutes sortes de substrats tels que des métaux ou des matériaux composites. Si désiré ou nécessaire, on peut appliquer une couche primaire d'accrochage, ou toute autre couche primaire, par exemple anti-corrosion, avant d'appliœr la peinture de l'invention.

Outre son utilisation sur avions en vue d'éviter l'accumulation d'lectricité statioue sur les parties non conductrices de l'électricité, les peintures de l'invention sont utiles dans l'industrie électronique pour le stockage de liquides inflammables (produits pétroliers notamment).

Les exemples non limitatifs suivants sont donnés en vue d'illustrer l'invention.

## Exemple 1

Cet exemple illustre la préparation de divers pigments oxydes d'étain dopés à l'oxyde d'antimoine en utilisant diverses proportions d'oxyde d'antimoine et des conditions de température et de durée variées. Les résultats obtenus montrent bien le caractère critique de la proportion de $Sb_2O_3$ et des conditions opératoires spécifiées ci-dessus. Le tableau ci-apèds récapitule les compositions essayées, les conditions opératoires utilisées et les propriétés des pigments résultants. La résistance électrique superficielle à été mesurée entre deux électrodes carrées en cuivre distantes de 1 mm la poudre de pigment étant comprimée entre ces deux électrodes. La tension entre les électrodes était de 1 volt.

Les pigments ont été préparés en mélangeant intimement de l'oxyde d'étain et de l'oxyde d'antimoine ayant une grosseur de particules comprises entre 20 et 150 $\mu/m$, dans des proportions désirées, pendant environ 10 minutes dans un mélangeur à poudre, puis en chauffant le melange resultant dans un four jusqu'à la température de calcination indiquée d'une manière continue.

| Pigment | g de $Sb_2O_3$ par 100 g de $SnO_2$ | Température °C de calcination | Durée, h | Résistance superficielle $\Omega$ /carré | Couleur |
|---|---|---|---|---|---|
| A* | 0,625 | 950 | 16 | 100 | gris |
| B | 1,25 | 950 | 16 | 12 | bland grisaâtre |
| C | 2,5 | 950 | 16 | 9 | blanc jaunâtre |
| D 1 | 5 | 900 | 16 | 9 | blanc jaunâtre |
| D 2 | 5 | 950 | 4 | 10 | blanc jaunâtre |
| D 3 | 5 | 950 | 2 | 10 | blanc jaunâtre |
| D 4 | 5 | 950 | 1 | 8 | blanc jaunâtre |
| D 5 | 5 | 950 | 5 mn | 8 | blanc jaunâtre |
| E* | 5 | 800 | 16 | 80 | jaunâtre |
| F | 10 | 950 | 16 | 20 | blanc, légèrement grisâtre |
| G* | 20 | 900 | 1 | 500 | gris |
| H* | 33,3 | 950 | 16 | 500 | gris |
| I* | 100 | 950 | 16 | 1000 | gris |
| J* | 5 | 400 | 3 | 9000 | |
| K* | 5 | 500 | 3 | 2500 | |
| L* | 5 | 600 | 3 | 1500 | |
| M* | 5 | 1150 | 3 | 1000 | |

\* = en dehors du cadre de l'invention, donné à titre comparatif.

## Exemple 2 (comparatif)

Cet exemple, donné à titre comparatif, illustre le caractère critique du choix de l'oxyde dántimoine comme agent dopant. Les Demanderesses ont essayé divers autres agents dopants, mais sans pouvoir obentir des pigments dopés présentant des propriétés de conductivité électriques aussi bonnes que celles des pigments de l'invention. Le tableau ci-après récapitule les compositions des pigments préparés, les conditions opératoires utilisées, et les propriétés des pigments obentus.

| Pigment | SnO$_2$, g | Agent dopant nature | Agent dopant quantité, g | Température, °C de calcination | Durée, h | Résistance superficiel- le, ohms/carré | Couleur |
|---|---|---|---|---|---|---|---|
| J | 100 | TeO$_2$ | 10 | 950 | 16 | 300 000 | gris |
| K | 100 | In$_2$O$_3$ | 10 | 800 | 16 | 400 000 | jaune |
| L | 100 | GeO$_2$ | 10 | 950 | 16 | 1 000 000 | blanc |
| M | 100 | GeO$_2$ | 20 | 1150 | 16 | 40 000 | blanc |
| N | 100 | GeO$_2$ | 100 | 1150 | 16 | 500 000 | blanc |
| O | 100 | TiO$_2$ | 10 | 950 | 16 | 400 000 | blanc |
| P | 100 | TiO$_2$ | 20 | 950 | 16 | 200 000 | blanc |
| Q | 100 | TiO$_2$ | 40 | 950 | 16 | 800 000 | blanc |
| R | 100 | TiO$_2$ Sb$_2$O$_3$ | 53,2 13,3 | 950 | 16 | 2 000 | blanc jaunâtre |
| S | 100 | TiO$_2$ Sb$_2$O$_3$ | 75 5 | 950 | 16 | 500 | blanc grisâtre |
| T | 100 | TiO$_2$ In$_2$O$_3$ | 53,2 13,3 | 800 | 16 | 2 000 000 | jaunâtre |

## Exemple 3

Cet exemple et les suivants illustrent la préparation de peintures à partir d'un pigment selon l'invention.

On obtient un revêtement blanc conducteur de l'électricite dont l'épaisseur après séchage est comprise entre 25 et 40 μ um en appliquant sur un substrat non conducteur de l'électricité une peinture préparée par le mode opératoire suivant :

A 17 g de liant polyuréthane DESMOPHEN 651 (polyester ramifié contenant 8 % de groupes hydroxyle, vendu par la Société Bayer), on ajoute 4,3 g d'acétate d'éthylèneglycol et 4 g d'acétate d'éthyle dans un disperseur vertical, on ajoute ensuite 62 g de poudre du pigment C de l'exemple 1 à la solution obtenue et on disperse pendant 10 minutes. Après cela, on rajoute 8,4 g d'acétate d'éthylèneglycol et 10 g d'acétate d'éthyle, puis on broie la pâte obtenue dans un broyeur à billes RED DEVIL pendant une heure. On sépare la composition obtenue des billes par tamisage. On rince les billes avec 4,3 g de méthylisobutycétone et on ajoute le produit de rinçage à la composition en mélangeant. On incorpore 13 g de durcisseur DESMODUR N 75 (un polyisocyanante aliphatique) à la composition résultante juste avant application de celle-ci.

Le rapport P/L est de 3.

La résistance superficielle R$_s$ du revêtement obtenu est de:

R$_s$ = 3MΩ/carré.

Le mode de préparation des compositions de peinture des exemples suivants se fait de façon similaire à celui décrit ci-dessus, à l'expression des modifications indiquées concernant les ingrédients employés.

## Exemple 4

On obtient un revêtement blanc conducteur de l'électricité dont l'épaisseur après séchage est comprise entre 25 et 40 microns, en appliquant sur un substrat non conducteur de l'électricité une peinture dont la composition est la suivante:
- liant polyuréthane DESIOPHEN 651 (17 g) et durcisseur DESMODUR N 75 (13 g) produits par BAYER
- pigment : mélange de poudres de pigment D$_1$ de l'exemple 1 (46,5 g) et de dioxyde de titane (15,5 g) vendu par MERCK
- solvants : mélange de cétones et d'acétates de l'exemple 3.
Le rapport P/L est de 3.
La résistance superficielle du revêtement obtenu est de:
R$_s$ = 17 MΩ/carré.

**Exemple 5**

On obtient un revêtement blanc conducteur de l'électricité dont l'épaisseur après séchage est comprise entre 25 et 40 microns, en appliquant sur un substrat non conducteur de l'électricité une peinture dont la composition est la suivante:
- liant polyuréthane : DESMOPHEN 651 (17 g) et durcisseur DESMODUR N 75 (13 g) produits par BAYER
- pigment : mélange de poudre du pigment C de l'exemple 1 (54,25 g) et de dioxyde de titane (7,75 g) vendu par MERCK
- solvants : mélange de cétones et d'acétates de l'exemple 3.
Le rapport P/L est de 3.
La résistance supererficielle du revêtement obtenu est de:

$R_s$ = 4 MΩ/carré.

**Exemple 6**

On obtient un revêtement blanc conducteur de l'électricité dont l'épaisseur après séchage est comprise entre 25 et 40 microns, en appliquant sur un substrat non conducteur de l'électricité ne peinture dont la composition est la suivante :
- liant polyuréthane : DESMOPHEN 651 (27 g) et durcisseur DESMODUR N 75 (13 g) produits par BAYER
- pigment : mélange de poudre de pigment $D_1$ de l'exemple 1 (46 g) et de dioxyde de titane (16 g) vendu par MERCK
- solvants : mélange de cétones et d'acétates de l'exemple 3.
Le rapr  t P/L est de 3.
La ré~i    nce superficielle du revêtement obtenu est de:
$R_s$ = 2ɔ MΩ/carré.

**Exemple 7**

On obtient un revêtement blanc conducteur de l'électricité dont l'épaisseur après séchage est comprise entre 25 et 40 microns, en appliquant sur un substrat non conducteur de l'électricité une peinture dont la composition est la suivante:
- liant polyuréthane : DESMOPHEN 651 (17 g) et durcisseur DESMODUR N 75 (13 g) produits par BAYER
- pigment : mélange de poudre de pigments $D_1$ de l'exemple 1 (45 g) et de dioxyde de titane (17 g) vendu par MERCK
- solvants : mélange de cétones et d'acétates de l'exemple 3.
Le rapport P/L est de 3.
La résistance superficielle du revêtement obtenu est de:

$R_s$ = 25 MΩ/carré.

**Exemple 8**

On obtient un revêtement blanc conducteur de l'électricité dont l'épaisseur après séchage est comprise entre 25 et 40 microns, en appliquant sur un substrat non conducteur de l'électricité une peinture dont la composition est la suivante :
- liant polyuréthane : DESMOPHEN 651 ( 17 g) et durcisseur DESTMODUR N 75 (13 g) produits par BAYER
- pigment : mélange de poudre de pigment C de l'exemple 1 (44 g) et de dioxyde de titane (18 g) vendu par MERCK
- solvante : mélange de cétones et d'acétates de l'exemple 3.
Le rapport P/L est de 3.
La résistance superficielle du revêtement obtenu est de:

$R_s$ = 43 MΩ/carré.

6

### Exemple 9

On obtient un revêtement blanc conducteur de l'électricité dont l'épaisseur après séchage est comprise entre 25 et 40 microns, en appliquant sur un substrat non conducteur de l'électricité une peinture dont la composition est la suivante:
- liant polyuréthane : DESMOPHEN 651 (18,5 g) et de durcisseur DESMODUR N 75 (14 g) produits par BAYER
- pigment : mélange de poudre de pigment C de l'exemple 1 (46,5 g) et de dioxyde de titane (15,5 g) vendu par MERCK
- solvants : mélange de cétones et d'acétates de l'exemple 3.

Le rapport P/L est de 2,75.
La résistance superficielle du revêtement est de:

$R_s = 52$ M$\Omega$/carré.

### Exemple 10

On obtient un revêtement blanc conducteur de l'électricité dont l'épaisseur après séchage est de 38 micromètres, en appliquant sur un substrat non conducteur de l'électricité une peinture dont la composition est la suivante :
- liant silicone : RHODORSIL 10336 (une résine méthylphénylsilicone en solution à 50 % dans du xylène) (42 g) de RHONE POULENC
- pigment : pigment D1 de l'exemple 1 (62 g)
- solvant xylène (30 g)

Le rapport P/L est de 3.
La résistance superficielle du revêtement est de :

$R_s = 4,5$ M$\Omega$/carré.

### Exemple 11

On obtient un revêtement blanc conducteur de l'électricité dont l'épaisseur après séchage est de 54 micromètres, en appliquant sur un substrat non conducteur de l'électricité une peinture dont la composition est la suivante :
- liant époxyde : ARALDITE GZ 601 x 75 ( époxyde à bas poids moléculaire, équivalent époxyde : 550-625) de CIBA-GEIGY (22 g) et de durcisseurs VERSAMID 100 (polyaminoamide de très haute viscosité, indice d'amine : 83-93) ( 19,2 g) et VERSAMID 115 (polyaminoamide de haute viscosité, indice d'amine : 240-260) (3,7 g) produits par SHERING
- pigment : pigment D1 de l'exemple 1 (92 g)
- solvants : mélange : xylène ( 15 g), butanol secondaire (15 g), acétate d'isobutyle (15 g) acétate d'éthylèneglycol (15 g).

Le rapport P/L est de 3.
La résistance superficielle du revêtement est de:

$R_s = 4$ M$\Omega$/carré.

### Exemple 12

On obtient un revêtement blanc conducteur de l'électricité dont l'épaisseur après séchage est de 95 micromètres, en appliquant sur un substrat non conducteur de l'électricité une peinture dont la composition est la suivante :
- liant époxyde : ARALDITE PY 341 (époxyde à base de bisphénol A modifiée avec un diluant réactif bifonctionnel, équivalent époxyde : 173-185) de CIBA-GEIGY (18 g) et durcisseur EPILINK 360 (polyaminoamide en émulsion aqueuse à 50 % dans l'eau, indice d'amine : 150-190) de AKZO (21 g)
- pigment : pigment D1 de l'exemple 1 (86 g)
- solvant : eau (35 g)

Le rapport P/L est de 3.
La résistance superficielle du revêtement est de :

$R_s = 3$ M$\Omega$/carré.

**Exemple 13**

On obtient un revêtement jaune conducteur de l'électricité dont l'épaisseur après séchage est de 50 micromètres, en appliquant sur un substrat non conducteur de l'électricité une peinture dont la composition est la suivante :
- liant polyuréthane : DESMOPHEN 651 (19,5 g) et durcisseur DESMODUR N 75 (14 g) produits par BAYER.
- pigment : mélange de poudre de pigment D1 de l'exemple 1 (47 g) et d'oxyde de fer jaune (8 g).
- solvants : mélange : acétate d'éthylèneglycol (12,7 g) et acétate d'éthyle (14 g).
Le rapport P/L est de 2,4.
La résistance superficielle du revêtement est de:

$R_s = 1$ MΩ /carré.

**Exemple 14**

On obtient un revêtement vert conducteur de l'électricité dont l'épaisseur après séchage est de 50 micromètres, en appliquant sur un substrat non conducteur de l'électricité une peinture dont la composition est la suivante :
- liant polyuréthane DESMOPHEN 651 (18,5 g) et durcisseur DESMODUR N 75 (14 g) produits par BAYER.
- pigment : mélange de poudre de pigment D1 de l'exemple 1 (47 g) et d'oxyde de chrome vert (15,5 g)
- solvants : mélange : acétate d'éthylèneglycol (12,7 g) et acétate d'éthyle (14 g)
Le rapport P/L est de 2,75.
La résistance superficielle du revêtement est de :

$R_s = 1$ MΩ/carré.

**Exemple 15**

On obtient un revêtement blanc conducteur de l'électricité dont l'épaisseur après sechage est de 40 micromètres, en appliquant sur un substrat non conducteur de l'électricité une peinture dont la composition est la suivante:
- liant polyuréthane DESMOPHEN 651 (18,5 g) et durcisseur DESMODUR N 75 (14 g) produits par BAYER
- pigment : pigment D1 de l'exemple 1 (62 g)
- solvants : mélange : acétate d'éthylèneglycol (12,7 g) et acétate d'éthyle (14 g).
Le rapport P/L est de 2,75.
La résistance superficielle du revêtement est de:

10 MΩ/carré.

**Exemple 16**

On obtient un revêtement blanc conducteur de l'électricité dont l'épaisseur après séchage est de 60 micromètres, en appliquant sur un substrat non conducteur de l'électricité une peinture dont la composition est la suivante:
- liant polyuréthane : DESMOPHEN 651 (18,5 g) et durcisseur DESMODUR N 75 (14 g) produits par BAYER.
- pigment : pigment D2 de l'exemple 1 (62 g)
- solvants : mélange : acétate d'éthylèneglycol (12,7 g) et acétate déthyle (14 g).
Le rapport P/L est de 2,75.
La résistance superficielle du revêtement est de:
> r $R_s = 8$ MΩ/carré.

**Exemple 17**

On obtient un revêtement blanc conducteur de l'électricité dont l'épaisseur après séchage est de 55 micromètres, en appliquant sur un substrat non conducteur de l'électricité une peinture dont la composition est la suivante :
- liant polyuréthane : DESMOPHEN 651 (18,5 g) et durcisseur DESMDUR N 75 (14 g) produits par BAYER.

- pigment : pigment D3 de l'exemple 1 (62 g)
- solvants : mélange : acétate d'éthylèneglycol (12,7 g) et acétate d'éthyle (14 g).
Le rapport P/L est de 2,75.
La résistance superficielle du revêtement est de:

$R_s = 9$ MΩ/carré.

## Exemple 18

On obtient un revêtement blanc conducteur de l'électricité dont l'épaisseur après séchage est de 48 micromètres, en appliquant sur un substrat non conducteur de l'électricité une peinture dont la composition est la suivante :
- liant polyméthane : DESMOPHEN 651 (18,5 g) et durcisseur DESMODUR N 75 (14 g) produits par BAYER.
- pigment: pigment D4 de l'exemple 1 (62 g)
- solvants : mélange : acétate d'éthylèneglycol (12,7 g) et acétate d'éthyle (14 g).
Le rapport P/L est de 2,75.
La résistance superficielle du revêtement est de:

$R_s = 9,5$ MΩ/carré.

## Exemple 19

On obtient un revêtement blanc conducteur de l'électricité dont l'épaisseur après séchage est de 35 micromètres, en appliquant sur un substrat non conducteur de l'électricité une peinture dont la composition est la suivante :
- liant polyméthane : DESMOPHE 651 (18,5 g) et durcisseur DESMODUR N 75 (14 g) produits mar BAYER.
- pigment : pigment D5 de l'exemple 1 (62 g)
- solvants : mélange : acétate d' éthylèneglycol (12,7 g) et acétate d'éthyle (14 g).
Le rapport P/L est de 2,75.
La résistance superficielle du revêtement est de:

$R_s = 15$ MΩ/carré.

## Exemple 20

On obtient un revêtement blanc conducteur de l'électricité d'épaisseurs différentes après séchage, en appliquant sur un substrat non conducteur de l'électricité une peinture dont la composition est la suivante :
- liant polyuréthane : DESMOPHEN 651 (18,5 g) et durcisseur DESMODUR N 75 (14 g) produits par BAYER.
- pigment : pigment D1 de l'exemple 1 (62 g)
- solvants : mélange : acétate d'éthylèneglycol ( 12,7 g) et acétate d'éthyle (14 g).
Le rapport P/L est de 2,75.
Les résistances superficielles du revêtement en fonction des différentes épaisseurs sont données dans le tableau ci-dessous :

| Epaisseur en μm | Rs en MΩ/carré. |
|---|---|
| 8 | 15 |
| 15 | 11 |
| 21 | 7,5 |
| 27 | 7 |
| 38 | 4,5 |
| 54 | 4 |

**Revendications**

1. Un procédé de préparation d'oxyde d'étain dopé par de l'oxyde d'antimoine, comprenant la préparation d'un mélange intime d'oxyde d'étain et d'oxyde d'antimoine contenant 0,1 à 20 % en poids d'antimoine puis le chauffage à température élevée du mélange résultant, caractérisé en ce qu'on mélange une proportion de 1,25 à 10 parties en poids d'oxyde d'antimoine $Sb_2O_3$ par 100 parties en poids d'oxyde d'étain $SnO_2$ et en ce qu'on calcine le mélange de $Sb_2O_3$ et de $SnO_2$ à une température dans la gamme de 900 à 950°C, de manière à obtenir un pigment oxyde d'étain dopé par de l'oxyde d'antimoine ayant une couleur blanche ou proche du blanc et une résistance électrique superficielle au plus égale à 20 ohms/carré.

2. Un procédé selon la revendication 1, caractérisé en ce qu'on mélange 2,5 à 5 parties d'oxyde d'antimoine par 100 parties d'oxyde d'étain.

3. Peinture blanche ou colorée comprenant au moins un pigment au moins un liant et au moins un solvant, caractérisée en ce que le pigment est un pigment produit par le procédé de la revendication 1 ou 2.

4. Peinture selon la revendication 3, caractérisée en ce qu'elle contient, en outre, au moins un pigment non conducteur de l'électricité, le rapport en poids pigment non conducteur de l'électricité/pigment de l'invention n'excédant pas 1 : 1.

5. Peinture selon la revendication 3 ou 4, caractérisée en ce que le rapport en poids pigments totaux/liant est dans la gamme de 1,5 à 4.


**Patentansprüche**

1. Verfahren zur Herstellung von mit Antimonoxid dotiertem Zinnoxid, bei welchem ein inniges Gemisch aus Zinnoxid und Antimonoxid hergestellt wird, welches 0,1 bis 20 Gew.-% Antimonoxid enthält, und das so erhaltene Gemisch auf hohe Temperatur erhitzt wird, dadurch gekennzeichnet, daß man einen Anteil von 1,25 bis 10 Gew.-Anteilen Antimonoxid $Sb_2O_3$ auf 100 Gew.-Teile Zinnoxid $SnO_2$ zumischt und daß man die Mischung aus Antimonoxid und Zinnoxid auf eine im Bereich zwischen 900 und 950° C liegende Temperatur erhitzt, so daß man ein mit Antimonoxid dotiertes Zinnoxid-Pigment erhält, welches weiße Farbe oder eine Weiß nahekommende Farbe und einen elektrischen Oberflächen-Widerstand von maximal gleich 20 Ohm/Quadrat aufweist.

2. Verfahren nach Anspruch 1, dadurch gekennzeichnet, daß man auf 100 Gew.-Teile Zinnoxid 2,5 bis 5 Teile Antimonoxid zumischt.

3. Weißer oder gefärbter Anstrich mit mindestens einem Pigment, mindestens einem Bindemittel und mindestens einem Lösungsmittel, dadurch gekennzeichnet, daß das Pigment ein nach dem Verfahren gemäß Anspruch 1 oder 2 hergestelltes Pigment ist.

4. Anstrich nach Anspruch 3, dadurch gekennzeichnet, daß er zusätzlich mindestens ein elektrisch nichtleitendes Pigment enthält, wobei das Gewichtsverhältnis zwischen dem elektrisch nichtleitenden Pigment und dem erfindungsgemäßen Pigment 1 : 1 nicht überschreitet.

5. Anstrich nach Anspruch 3 oder 4, dadurch gekennzeichnet, daß das Verhältnis Gesamtgewicht der Pigmente/Bindemittel im Bereich von 1,5 bis 4 liegt.


**Claims**

1. A process for the preparation of an antimony oxide-doped tin oxide pigment comprising preparing an intimate mixture of tin oxide and of antimony oxide containing 0.1 to 20 % by weight of antimony, then heating at a high temperature the resultant mixture, characterized by mixing a proportion of 1.25 to 10 parts by weight of antimony oxide $Sb_2O_3$ per 100 parts by weight of tin oxide $SnO_2$ and firing the mixture of $Sb_2O_3$ and of $SnO_2$ at a temperature in the range from 900 to 950°C, so as to obtain an antimony oxide-doped tin oxide having a white or off-white color and a surface electrical resistance not exceeding 20 ohms/square.

2. A process according to claim 1, characterized in that 2.5 to 5 parts of antimony oxide are mixed per 100 parts of tin oxide.

3. White or colored paint comprising at least one pigment, at least one binder and at least one solvent, characterized in that the pigment is a pigment produced by the process according to claim 1 or 2.

4. Paint according to claim 3, characterized in that it additionally contains at least one electrically non-conductive pigment, the weight ratio of the electrically non-conductive pigment to the pigment of the invention not exceeding 1 : 1.

5. Paint according to claim 3 or 4, characterized in that the weight ratio of total pigments to the binder is in the range from 1,5 to 4.